# EUROPÄISCHE PATENTSCHRIFT

(11) **EP 1 437 267 B1**
(45) Veröffentlichungstag und Bekanntmachung des Hinweises auf die Patenterteilung: **28.12.2005**
(21) Anmeldenummer: 04000114.1
(22) Anmeldetag: 07.01.2004
(51) Int. Cl.: B60R 21/20

(54) **Airbagmodul für ein Kraftfahrzeug mit einem Airbagmodulgehäuse und Verfahren zur Herstellung einer Schweissverbindung zwischen einer Einblasöffnung eines Airbags und einer Gasaustrittsöffnung eines Airbagmodulgehäuse**
Airbag module for vehicle with an airbag module housing and method of producing welded joint between an opening of an Airbag and degassing opening of an an airbag module housing.
Module de coussin gonflable de securité avec un boîtier de module de coussin gonflable et methode pour réaliser un joint de soudure entre l'entrée d'un coussin gonflable et un boîtier de module de coussin gonflable.

(30) Priorität: 11.01.2003 DE 10300757
(43) Veröffentlichungstag der Anmeldung: 14.07.2004
(73) Patentinhaber: ADAM OPEL AG, 65423 Rüsselsheim (DE)
(72) Erfinder: Rick, Ulrich, 55595 Roxheim (DE)

(56) Entgegenhaltungen:
- EP-A- 0 873 915
- EP-A- 0 916 554
- EP-A- 1 316 482
- DE-A- 4 326 515

## Beschreibung

Die Erfindung bezieht sich auf Airbagmodul für ein Kraftfahrzeug mit einem Airbagmodulgehäuse, das eine Airbagkammer für einen durch einen Gasgenerator aufblasbaren Airbag aufweist, dessen Einblasöffnung randseitig umlaufend mit einem Rand einer Gasaustrittsöffnung des Airbagmodulgehäuses verschweißt ist, wobei die Ränder der Gasaustrittsöffnung und der Einblasöffnung aus einem thermoplastischen Kunststoff gefertigt sind, und ein Verfahren zur Herstellung einer Schweißverbindung zwischen einer Einblasöffnung eines Airbags eines Kraftfahrzeuges und einer Gasaustrittsöffnung eines Airbagmodulgehäuses.

Die Gattungsbildende DE 197 50 443 A1 offenbart ein Rückhaltesystem für Fahrzeuginsassen eines Kraftfahrzeuges mit einem bei einem Unfall durch einen Gasgenerator zu einem Auffangkissen aufblasbaren Gassack, der mit dem Rand seiner Einblasöffnung an dem Rand einer an die Einblasöffnung mündenden Öffnung eines den Gasgenerator aufnehmenden Gehäuses befestigt ist. Das Gehäuse und der Gassack bestehen im Wesentlichen aus miteinander verschweißbaren oder verklebbaren Werkstoffen und der Rand der Einblasöffnung des Gassackes ist zumindest an einem Teil seines Umfanges mit dem Rand der Öffnung des Gehäuses durch Schweißen oder Kleben unlösbar verbunden. Als Schweißverfahren finden das Hochfrequenzschweißen, Ultraschallschweißen, Wärmekontaktschweißen, Wärmeimpulsschweißen oder Kombinationen dieser Schweißverfahren Anwendung. Bei sämtlichen dieser Schweißverfahren wird der Werkstoff der zu fügenden Teile in der Schweißzone durch Zufuhr von Energie in den schmelzflüssigen Zustand überführt und die Teile werden unter Druck zusammengefügt. Hierbei kann es vorkommen, dass sich der obere Rand des Gehäuses verformt, weshalb eine prozesssichere Schweißung in der Großserienfertigung erschwert ist. Bei nicht ordnungsgemäßer Schweißung entsteht die Gefahr des Abschälens des Airbags während des Aufblasvorganges vom Rand des Gehäuses. Um dies zu vermeiden, sind erhöhte Qualitätskontrollen, die zu hohen Ausschussraten führen und erhebliche Kosten verursachen, erforderlich. Darüber hinaus benötigen die beim Ultraschallschweißen verwendeten Schweißsonotroden sowie zugehörige Aufnahmewerkzeuge relativ viel Platz, um die Schweißsonotrode präzise an die Schweißfläche heranzufahren. Dies schränkt die Konstruktion des Airbaggehäuses in erheblichem Maße ein. Des Weiteren ist das Ultraschallschweißverfahren relativ zeitaufwendig und seine Taktzeit liegt über den Fertigungszeiten der restlichen Arbeitsschritte zur Montage des Airbagmoduls.

Ferner ist es bekannt, Bauteile aus thermoplastischen Kunststoffen im Laserdurchstrahlverfahren unter hohen Prozessgeschwindigkeiten und Schweißnahtqualitäten miteinander zu verschweißen.

Es ist Aufgabe der Erfindung, ein Airbagmodul und ein Verfahren zur Herstellung einer Schweißverbindung zwischen einer Einblasöffnung eines Airbags und einer Gasaustrittsöffnung eines Airbagmodulgehäuses der eingangs genannten Art zu schaffen, das die eingangs genannten Nachteile vermeidet und mit dem eine prozesssichere wirtschaftliche Fertigung sichergestellt ist.

Bei einem Airbagmodul wird die Aufgabe erfindungsgemäß dadurch gelöst, dass zumindest der Rand der Einblasöffnung aus einem laserstrahltransparenten Kunststoff und wenigstens der Rand der Gasaustrittsöffnung aus einem laserstrahlabsorbierender Kunststoff besteht, wobei die Schweißverbindung im Laserdurchstrahlverfahren durchgeführt ist.

Beim Laserdurchstrahlverfahren durchdringt der Laserstrahl den laserstrahltransparenten Kunststoff des Randes der Einblasöffnung und trifft auf den laserstrahlabsorbierender Kunststoff des Randes der Gasaustrittsöffnung, in dem der Laserstrahl in Wärme umgewandelt wird und zur Plastifizierung führt. Durch die dabei entstehende lokale Volumenzunahme entsteht ein flächiger Kontakt zum laserstrahltransparenten Kunststoff des Randes der Einblasöffnung und durch die auftretende Wärmeleitung wird auch der laserstrahltransparente Kunststoff des Randes der Einblasöffnung plastifiziert und der Schweißprozess ist ohne Druckbeaufschlagung abgeschlossen. Somit ist eine Abschälung des Airbags bei dessen Aufblasvorgang von dem Rand der Gasaustrittsöffnung aufgrund einer Schweißung unter druckbedingter Verformung des Randes der Gasaustrittsöffnung ausgeschlossen. Im Weiteren stellt das Schweißen im Laserdurchstrahlverfahren hohe Prozessgeschwindigkeiten sicher und gewährleistet damit eine prozesssichere Fertigung des Airbagmoduls in großen Stückzahlen.

Vorteilhafterweise ist der Laserstrahl des Laserdurchstrahlverfahrens derart geführt oder ausgebildet, dass er in parallelen, zueinander beabstandeten und/oder zick-zack-förmigen Linien, Schlangenlinien oder Kombinationen dieser Linienarten in die Kunststoffe eindringt. Die Art der Linienführung wird in Abhängigkeit von den Anforderungen an die Festigkeit des jeweils zu verschweißenden Bereichs der von den Rändern der Einblasöffnung und der Gasaustrittsöffnung gebildeten Kontur gewählt. Darüber hinaus haben die unterschiedlichen Linienarten Einfluss auf die Dichtigkeit der Schweißnaht, da mit einer entsprechenden Führung des Laserstrahls eine mehr oder weniger intensive Erwärmung eines größeren oder kleineren Bereichs der zu verschweißenden Kontur einhergeht. Die Art der Führung des Laserstrahls oder dessen Ausbildung wird unter dem Gesichtspunkt der Verfahrensoptimierung anforderungsgerecht ausgewählt.

Zur Bereitstellung eines laserstrahlabsorbierenden Kunststoffes für den Rand der Gasaustrittsöffnung ist vorzugsweise der Kunststoff des Airbagmodulgehäuses derart eingefärbt, dass er im optisch sichtbaren Lichtwellenbereich schwarz erscheint und im Infrarot-Bereich eine hohe Transmission aufweist. Der Transmissionsgrad wird im Wesentlichen durch den Materialtyp, den Füllstoffgehalt sowie den Farbstoff des Kunststoffes beeinflusst, wobei das Airbagmodulgehäuse beispielsweise aus einem glasfaserverstärkten Polyamid gefertigt ist.

Zur Einstellung der Absorptionseigenschaft des laserstrahlabsorbierenden Kunststoffes des Airbagmodulgehäuses sowie dessen Rand der Gasaustrittsöffnung ist bevorzugt der Kunststoff des Airbagmodulgehäuses mit Rußpartikeln eingefärbt. Hierbei ist zu beachten, dass die Eindringtiefe des Laserstrahls mit dem Anteil von Rußpartikeln in dem Kunststoff variiert. Je größer der Anteil von Rußpartikeln desto größer ist die Absorption und desto geringer die Eindringtiefe des Laserstrahls und damit das aufgeschmolzene Materialvolumen. Während für das Konturschweißen ein hohes Aufschmelzvolumen und damit eine höhere Eindringtiefe erforderlich sind, ist beim Simultanschweißen eine hohe Absorption mit geringer Eindringtiefe zur schnellen Plastifizierung besser geeignet.

Zweckmäßigerweise weist der Rand der Gasaustrittsöffnung mindestens einen sich in Richtung des Randes der Einblasöffnung erstreckenden umlaufenden Wulst zur Bestimmung der Schweißzone auf. Dieser Wulst kann derart bemessen werden, dass er beim Schweißen durch den Laser vollständig plastifiziert wird und vor dem Schweißen eine Anlagezone für den Einblasmund des Airbags bildet, über der der Einblasmund derart verspannt wird, dass er in den plastifizierten Kunststoff des Airbagmodulgehäuses beim Schweißen eingedrückt wird. Des Weiteren ist es auch möglich, den Einblasmund mittels eines transparenten Stempels gegenüber dem Wulst und damit dem beim Schweißen plastifizierten Material mit Druck zu beaufschlagen.

Um die Einblasöffnung des Airbags in einer vorbestimmten Lage zur Gasaustrittsöffnung des Airbagmodulgehäuses vor und während des Schweißens zu halten, ist das Airbagmodulgehäuse mit Halteelementen zur Fixierung des Randes der Einblasöffnung vor und während des Laserschweißens versehen. Die Halteelemente können beispielsweise als Halteklammern ausgebildet sein, unter die der Rand der Einblasöffnung geklemmt wird.

Zur Vermeidung einer thermischen Vorschädigung des Airbags aufgrund der beim Laserschweißen herrschenden Temperaturen weist bevorzugt der Kunststoff des Airbags einen gegenüber dem Kunststoff des Airbagmodulgehäuses erhöhten Schmelzpunkt auf.

Für eine Optimierung der Befestigung des Airbags an dem Airbagmodulgehäuse und zur Steigerung der Festigkeit des Airbags im Anbindungsbereich zum Airbagmodulgehäuse ist vorzugsweise der Kunststoff des Airbags zumindest im Bereich des Randes der Einblasöffnung mit jeweils mindestens einer Gewebelage und/oder Gewirkelage verstärkt. Es ist daher möglich, eine oder mehrere Gewebelagen und Gewirkelagen miteinander kombiniert in den Kunststoff des Airbags einzuarbeiten. Zweckmäßigerweise sind mehrere Gewebelagen unterschiedlicher Fadendicke und/oder Maschenweite in den Kunststoff eingearbeitet. Bevorzugt ist die Gewebelage mit der größten Maschenweite unmittelbar benachbart sowie parallel zum Rand der Gasaustrittsöffnung angeordnet. Durch die Kapillarwirkung des Gewebes findet eine gute Durchdringung des plastifizierten Kunststoffes mit dem Gewebe statt. Zweckmäßigerweise sind die Gewebelagen und/oder Gewirkelagen miteinander vernäht oder verklebt.

Zur weiteren Verstärkung des Randes der Einblasöffnung im Anbindungsbereich an den Rand der Gasaustrittsöffnung des Airbagmodulgehäuses ist vorzugsweise der Kunststoff des Randes der Einblasöffnung zum Verschweißen in mehreren übereinanderliegend geschlauften Lagen auf dem Rand der Gasaustrittsöffnung angeordnet. Alternativ dazu ist der Kunststoff des Randes der Einblasöffnung zumindest einlagig in mindestens einer Verstärkungslage eingebettet auf dem Rand der Gasaustrittsöffnung angeordnet, wobei ein gemeinsames Verschweißen des Randes der Einblasöffnung und der Verstärkungslage mit dem Rand der Gasaustrittsöffnung erfolgt.

In weiterer Ausgestaltung der Erfindung ist der Rand der Einblasöffnung an seinem äußeren Umfang umlaufend mit einem elastischen Spannmittel versehen, das derart im Bereich des Randes der Gasaustrittsöffnung angreift, dass es die Einblasöffnung vor und/oder während des Laserschweißens gegenüber der Gasaustrittsöffnung fixiert und in der Schweißzone in Anlage hält.

Die Aufgabe wird erfindungsgemäß bei einem Verfahren zur Herstellung einer Schweißverbindung zwischen einer Einblasöffnung eines Airbags eines Kraftfahrzeuges und einer Gasaustrittsöffnung eines einen Gasgenerator aufnehmenden Airbagmodulgehäuses nach dem Oberbegriff des Anspruchs 1 dadurch gelöst, dass die Schweißverbindung zwischen dem aus einem laserstrahltranspärenten Kunststoff bestehenden Rand der Einblasöffnung des Airbags und dem aus einem laserstrahlabsorbierende Kunststoff gefertigten Rand der Gasaustrittsöffnung des Airbagmodulgehäuses in einem Laserdurchstrahlverfahren hergestellt wird.

Mit dem Laserdurchstrahlverfahren wird bei einer kurzen Schweißzeit eine hohe Schweißnahtfestigkeit im Bereich der Grundmaterialfestigkeit erzielt, wobei die Schweißnaht wulstfrei ausgeführt wird. Weiterhin wird mit dem Laserdurchstrahlverfahren abrieb- und erschütterungsfreier Schweißvorgang mit einer präzisen örtlichen und kontaktlosen Wärmeeinbringung in die zu verschweißenden Kunststoffe bereitgestellt, wodurch eine prozesssichere wirtschaftliche Fertigung sichergestellt ist.

Als Lichtquelle für den Laserstrahl wird zweckmäßigerweise ein Festkörperlaser oder ein Hochleistungsdiodenlaser für das Laserdurchstrahlverfahren verwendet. Vorzugsweise wird das Laserdurchstrahlverfahren als Konturschweißverfahren oder Simultanschweißverfahren durchgeführt. Während mit dem Konturschweißverfahren komplexe Geometrien zu verschweißen sind, zeichnet sich das Simultanschweißverfahren durch eine relative geringe Prozesszeit aus.

Zur Verschweißung nahezu beliebiger zwei- oder dreidimensionaler Konturen der Einblasöffnung bzw. der Gasaustrittsöffnung wird bevorzugt der Laserstrahl mittels eines Roboters entlang der von dem Rand der Einblasöffnung und dem Rand der Gasaustrittsöffnung gebildeten zu verschweißenden Kontur geführt. Bei diesem als Konturschweißen bekannten Verfahrensprinzip ist es selbstverständlich auch möglich, dass das Werkstück, also der Rand der Einblasöffnung mit dem zugeordneten Rand der Gasaustrittsöffnung, rechnergesteuert entlang des Laserstrahls geführt wird.

Alternativ dazu werden zur Erzeugung des Laserstrahls Laserdiodenbarren oberhalb der zu verschweißenden Kontur angeordnet. Bei diesem als Simultanschweißen bekannten Verfahren wird die zu verschweißende Kontur, also die Schweißnaht, komplett gleichzeitig bestrahlt, so dass relativ kurze Prozesszeiten gewährleistet sind.

Um eine definierte Lage der Einblasöffnung des Airbags zu der Gasaustrittsöffnung des Airbagmodulgehäuses vor und während des Fügens zu gewährleisten, wird der Rand der Einblasöffnung an dem Rand der Gasaustrittsöffnung vor dem Verschweißen fixiert. Zweckmäßigerweise wird der Rand der Einbläsöffnung mittels eines transparenten Stempels auf den Rand der Gasaustrittsöffnung gepresst. Alternativ hierzu wird der Rand der Einblasöffnung derart an dem Rand der Gasaustrittsöffnung verspannt, dass er unter Vorspannung an einem Wulst in der Schweißzone des Randes der Gasaustrittsöffnung anliegt. Durch die unterschiedlichen Arten der Fixierung der Einblasöffnung an der Gasaustrittsöffnung wird eine homogene Verbindung der durch den Laserstrahl plastifizierten Kunststoffe erzielt.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand mehrerer Ausführungsbeispiele unter Bezugnahme auf die zugehörigen Zeichnungen näher erläutert. Es zeigen:
- Fig. 1: einen Teilschnitt durch ein erfindungsgemäßes Airbagmodul,
- Fig. 2: eine vergrößerte Schnittdarstellung gemäß Einzelheit II nach Fig. 1 in einer ersten alternativen Ausgestaltung,
- Fig. 3: eine vergrößerte Schnittdarstellung gemäß Einzelheit II nach Fig. 1 in einer zweiten alternativen Ausgestaltung,
- Fig. 4: eine vergrößerte Schnittdarstellung gemäß Einzelheit II nach Fig. 1 in einer dritten alternativen Ausgestaltung,
- Fig. 5: eine vergrößerte Darstellung gemäß Einzelheit V nach Fig. 1 in einer alternativen Ausgestaltung,
- Fig. 6: eine vergrößerte Darstellung gemäß Einzelheit V nach Fig. 1 in einer zweiten alternativen Ausgestaltung,
- Fig. 7: eine vergrößerte Darstellung gemäß Einzelheit V nach Fig. 1 in einer dritten alternativen Ausgestaltung,
- Fig. 8 bis Fig. 12: Darstellungen alternativer Linienführungen eines Lasers beim Laserdurchstrahlverfahren,
- Fig. 13: eine Fixierung einer Einblasöffnung eines Airbags an eine Gasaustrittsöffnung eines Airbagmodulgehäuses und
- Fig. 14: eine alternative Fixierung der Einblasöffnung an der Gasaustrittsöffnung.

Das Airbagmodul 1 für ein Kraftfahrzeug umfasst ein Airbagmodulgehäuse 2 mit einer Airbagkammer 3 für einen durch einen nicht dargestellten Gasgenerator aufblasbaren Airbag 4. Eine Einblasöffnung 5 des Airbags 4, durch die das vom Gasgenerator generierte Aufblasgas in den Airbag 4 einströmt, ist randseitig umlaufend mit einem Rand einer Gasaustrittsöffnung 6 des Airbagmodulgehäuses 2 im Laserdurchstrahlverfahren verschweißt. Hierbei sind der Rand der Einblasöffnung 5 sowie der übrige Teil des Airbags 4 aus einem thermoplastischen laserstrahltransparenten Kunststoff 7 und der Rand der Gasaustrittsöffnung 6 sowie der restliche Teil des Airbagmodulgehäuse 2 aus einem thermoplastischen laserstrahlabsorbierenden Kunststoff 8 gefertigt. Zur Erzielung einer hohen Transmission des laserstrahlabsorbierenden Kunststoffes 8 des Airbagmodulgehäuses 2 ist dieser Kunststoff 8 mit Rußpartikeln eingefärbt. Für die Begrenzung von Schweißzonen durch Anlageflächen 9 weist das Airbagmodulgehäuse 2 umlaufende Wulste 10 auf, an denen der Rand der Einblasöffnung 5 des Airbags 4 vorgespannt anliegt. Beim Konturschweißverfahren werden zwei Laserstrahlen 11 entlang der parallel sowie beabstandet zueinander verlaufenden umfangsseitigen Wulste 10 des Randes der Gasaustrittsöffnung 6 des Airbagmodulgehäuses 2 geführt. Die Laserstrahlen 11 durchdringen den laserstrahltransparenten Kunststoff 7 des Randes der Einblasöffnung 5 und treffen auf den laserstrahlabsorbierenden Kunststoff 8 des Randes der Gasaustrittsöffnung 6 des Airbagmodulgehäuses 2, wo die Laserstrahlen 11 in Wärme umgewandelt werden und zur Plastifizierung des laserstrahlabsorbierenden Kunststoffes 8 führen. Durch die dabei entstehende örtliche Volumenzunahme entsteht ein flächiger Kontakt des plastifizierten Kunststoffes 8 zu dem laserstrahltransparenten Kunststoff 7 und die dabei auftretende Wärmeleitung führt zu einer Plastifizierung des lasertransparenten Kunststoffes 7 des Randes der Einblasöffnung 5. Damit ist der Schweißprozess nach dem Laserdurchstrahlverfahren zur Verbindung des Randes der Einblasöffnung 5 des Airbags 4 mit dem Rand der Gasaustrittsöffnung 6 des Airbagmodulgehäuses 2 abgeschlossen.

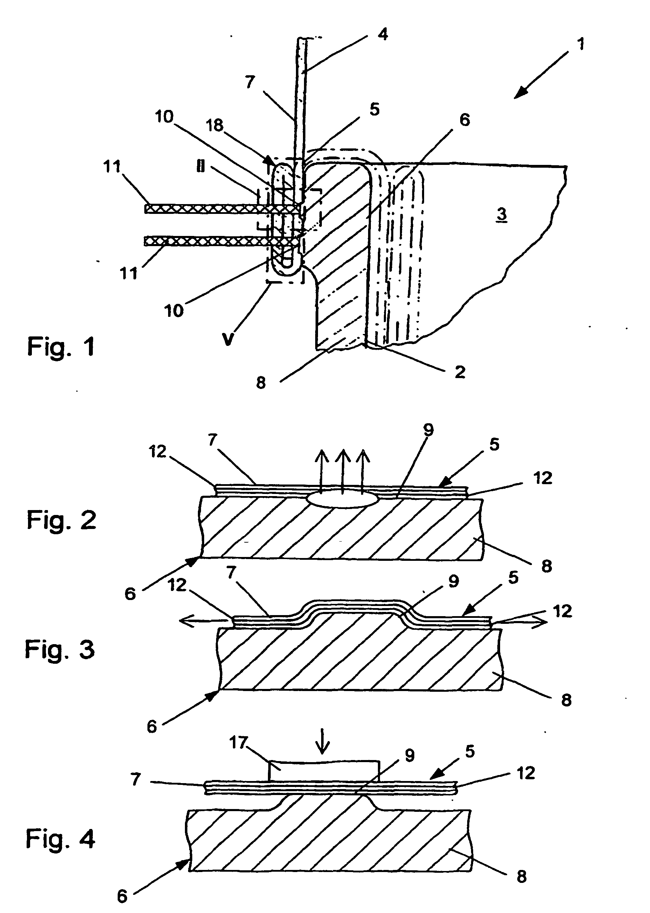

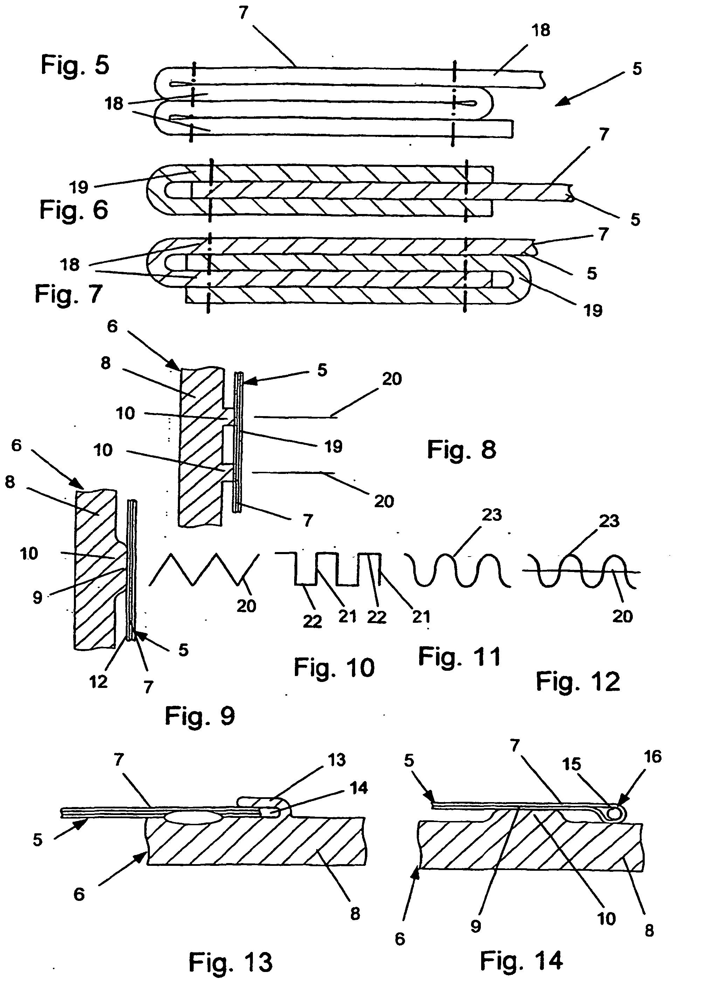

Um die Festigkeit des Airbags 4 im Bereich seiner Einblasöffnung 5 zu steigern ist der laserstrahltransparente Kunststoff 7 mit mehreren miteinander vernähten oder verklebten Gewebelagen 12 verstärkt. Hierbei können entsprechend den Festigkeitsanforderungen unterschiedliche Fadendicken bzw. Maschenweiten Anwendung finden, wobei zur Unterstützung der Kapillarwirkung, wie in Fig. 2 verdeutlicht, die Gewebelage 12 mit der größten Maschenweite unmittelbar an dem Rand der Gasaustrittsöffnung 6 des Airbagmodulgehäuses 2 zur Anlage kommt. Um die Wärmeleitung während des Schweißens im Laserdurchstrahlverfahren zu begünstigen und die Einblasöffnung 5 des Airbags 4 positionsgenau an der Gasaustrittsöffnung 6 des Airbagmodulgehäuses 2 vor und während des Schweißens zu fixieren, weist das Airbagmodulgehäuse 2 nach Fig. 13 umfangsseitig angeordnete Halteelemente 13 auf, die derart einstückig mit dem Airbagmodulgehäuse 2 verbunden sind, dass die Einblasöffnung 5 randseitig in einen zwischen dem Halteelement 13 und dem Airbagmodulgehäuse 2 gebildeten Freiraum 14 gehalten ist.

In einer alternativen Ausgestaltung wird der Rand der Einblasöffnung 5 des Airbags 4 gem. den Fig. 3 und 14 unter Zugbelastung an dem Wulst 10 des Randes der Gasaustrittsöffnung 6 des Airbagmodulgehäuses 2 fixiert. Hierzu ist der Rand der Einblasöffnung 5 an seinem äußeren Umfang umlaufend mit einem als Gummiband 15 ausgebildeten elastischen Spannmittel 16 versehen, das von Gewebelagen 12 des Randes der Einblasöffnung 5 umschlossen ist. Das Gummiband 15 greift derart im Bereich der Gasaustrittsöffnung 6 an, dass es die Einblasöffnung 5 vor bzw. während des Laserschweißens gegenüber der Gasaustrittsöffnung 6 fixiert und die Einblasöffnung 5 in der durch den Wulst 10 begrenzten Schweißzone in Anlage an der Gasaustrittsöffnung 6 hält.

Nach einer weiteren alternativen Ausgestaltung wird der Rand der Einblasöffnung 5 des Airbags 4 mittels eines transparenten Stempels 17 auf die Anlagefläche 9 de Wulstes 10 gepresst, um die Einblasöffnung 5 vor und während des Laserschweißens gegenüber der Gasaustrittsöffnung 6 zu fixieren. Darüber hinaus bewirkt die Fixierung der Einblasöffnung 5 an der Gasaustrittsöffnung 6 eine relativ schnelle Plastifizierung des lasertransparenten Kunststoffes 7 aufgrund der Wärmeleitung des durch den Laserstrahl 11 plastifizierten laserstrahlabsorbierenden Kunststoffes 8 des Airbagmodulgehäuses 2 sowie eine homogene Verbindung der plastifizierten Kunststoffe 7, 8, wodurch eine hohe Schweißnahtfestigkeit im Bereich der Grundmaterialfertigkeit dieser Kunststoffe 7, 8 erzielt wird. Zur Vermeidung thermischer Vorschädigüngen des Kunststoffes 7 des Airbags 4 weist dieser Kunststoff 7 einen höheren Schmelzpunkt als der Kunststoff 8 des Airbagmodulgehäuses 2 auf.

Um die Schweißnaht sowie den Rand der Einblasöffnung 5 des Airbags 4 zu verstärken, ist der Kunststoff 7 des Randes der Einblasöffnung 5 gemäß den Fig. 1 und 5 in mehreren übereinanderliegend geschlauften Lagen 18 auf dem Rand der Gasaustrittsöffnung 6 angeordnet. Eine Verstärkung dieser Zone wird auch erzielt, wenn der Kunststoff 7 des Randes der Einblasöffnung 5 gemäß Fig. 6 von einer Verstärkungslage 19 umschlungen ist. In der dazu alternativen Ausführung gemäß Fig. 7 ist der Rand der Einblasöffnung in zwei geschlauften Lagen 18 um den Rand der Gasaustrittsöffnung 6 gelegt, wobei eine der Lagen 18 zwischen einer geschlauften Verstärkungslage 19 aufgenommen ist.

Zur Erwärmung der Schweißzone wird der Laserstrahl 12 linienförmig geführt. Dabei kann ein Laserstrahl 12 gemäß Fig. 8 zwei parallel sowie beabstandet zueinander ausgerichteten Linien 20 folgen. Diese parallelen Linien 20 können auch durch zwei parallel geführte Laserstrahlen 11 gleichzeitig erzeugt werden. Gemäß Fig. 9 wird der Laserstrahl 11 entlang einer zick-zack-förmigen Linie über die Schweißzone geführt. Gemäß Fig. 10 verfährt der Laserstrahl 11 entlang vertikaler Linienabschnitte 21, die er mittels horizontaler Linienabschnitte 22 verbindet. Alternativ hierzu beschreibt der Laserstrahl 11 nach Fig. 11 eine Schlangenlinie 23 zur Erwärmung der Schweißzone. Gemäß Fig. 12 werden ein oder zwei Laserstrahlen 11 derart geführt, dass sie in Form einer Schlangenlinie 23, die mittig von einer geraden Linie 20 durchzogen ist, die Schweißzone und damit die Kunststoffe 7, 8 den Rand der Einblasöffnung 5 und der Gausaustrittsöffnung 6 erwärmen.

### Bezugszeichenliste

- 1.: Airbagmodul
- 2.: Airbagmodulgehäuse
- 3.: Airbagkammer
- 4.: Airbag
- 5.: Einblasöffnung
- 6.: Gasaustrittsöffnung
- 7.: laserstrahltransparenter Kunststoff
- 8.: lasterstrahlabsorbierender Kunststoff
- 9.: Anlagefläche
- 10.: Wulst
- 11.: Laserstrahl
- 12.: Gewebelage
- 13.: Haltelement
- 14.: Freiraum
- 15.: Gummiband
- 16.: Spannmittel
- 17.: Stempel
- 18.: Geschlaufte Lage
- 19.: Verstärkungslage
- 20.: Linien
- 21.: vertikaler Linienabschnitt
- 22.: horizontaler Linienabschnitt
- 23.: Schlangenlinie

## Patentansprüche

1. Airbagmodul für ein Kraftfahrzeug mit einem Airbagmodulgehäuse (2), das eine Airbagkammer (3) für einen durch einen Gasgenerator aufblasbaren Airbag (4) aufweist, dessen Einblasöffnung (5) randseitig umlaufend mit einem Rand einer Gasaustrittsöffnung (6) des Airbagmodulgehäuses (2) verschweißt ist, wobei die Ränder der Gasaustrittsöffnung (6) und der Einblasöffnung (5) aus einem thermoplastischen Kunststoff gefertigt sind, **dadurch gekennzeichnet, dass** zumindest der Rand der Einblasöffnung (5) aus einem laserstrahltransparenten Kunststoff (7) und wenigstens der Rand der Gasaustrittsöffnung (6) aus einem laserstrahlabsorbierenden Kunststoff (8) besteht, wobei die Schweißverbindung im Laserdurchstrahlverfahren durchgeführt ist.

2. Airbagmodul nach Anspruch 1, **dadurch gekennzeichnet, dass** der Laserstrahl (11) des Laserdurchstrahlverfahrens derart geführt oder ausgebildet ist, dass er in parallelen, zueinander beabstandeten und/oder zick-zack-förmigen Linien (20), Schlangenlinien (23) oder Kombinationen dieser Linienarten in die Kunststoffe (7, 8) eindringt.

3. Airbagmodul nach Anspruch 1, **dadurch gekennzeichnet, dass** der Kunststoff (8) des Airbagmodulgehäuses (2) derart eingefärbt ist, dass er im optisch sichtbaren Lichtwellenbereich schwarz erscheint und im Infrarot-Bereich eine hohe Transmission aufweist.

4. Airbagmodul nach Anspruch 3, **dadurch gekennzeichnet, dass** der Kunststoff (8) des Airbagmodulgehäuses (2) mit Rußpartikeln eingefärbt ist.

5. Airbagmodul nach einem der Ansprüche 1 bis 4, **da**_{**-**} **durch gekennzeichnet,** dass der Rand der Gasaustrittsöffnung (6) mindestens einen sich in Richtung des Randes der Einblasöffnung (5) erstreckenden umlaufenden Wulst (10) zur Bestimmung der Schweißzone aufweist.

6. Airbagmodul nach einem der Ansprüche 1 bis 5, **dadurch gekennzeichnet, dass** das Airbagmodulgehäuse (2) mit Halteelementen (13) zur Fixierung des Randes der Einblasöffnung (5) vor und während des Laserschweißens versehen ist.

7. Airbagmodul nach Anspruch 1, **dadurch gekennzeichnet dass** der Kunststoff (7) des Airbags (4) einen gegenüber dem Kunststoff (8) des Airbagmodulgehäuses (2) erhöhten Schmelzpunkt aufweist.

8. Airbagmodul nach einem der Ansprüche 1 bis 7, **dadurch gekennzeichnet, dass** der Kunststoff (7) des Airbags (4) zumindest im Bereich des Randes der Einblasöffnung (5) mit jeweils mindestens einer Gewebelage (12) und/oder Gewirkelage verstärkt ist.

9. Airbagmodul nach Anspruch 8, **dadurch gekennzeichnet, dass** mehrere Gewebelagen (12) unterschiedlicher Fadendicke und/oder Maschenweite in den Kunststoff (7) eingearbeitet sind.

10. Airbagmodul nach Anspruch 9, **dadurch gekennzeichnet, dass** die Gewebelage (12) mit der größten Maschenweite unmittelbar benachbart sowie parallel zum Rand der Gasaustrittsöffnung (6) angeordnet ist.

11. Airbagmodul nach einem der Ansprüche 8 bis 10, **dadurch gekennzeichnet, dass** die Gewebelagen (12) und/oder die Gewirkelagen miteinander vernäht oder verklebt sind.

12. Airbagmodul nach einem der Ansprüche 1 bis 11, **dadurch gekennzeichnet, dass** der Kunststoff (7) des Randes der Einblasöffnung (5) zum Verschweißen in mehreren übereinanderliegend geschlauften Lagen (18) auf dem Rand der Gasaustrittsöffnung (6) angeordnet ist.

13. Airbagmodul nach einem der Ansprüche 1 bis 11, **dadurch gekennzeichnet, dass** der Kunststoff (7) des Randes der Einblasöffnung (5) zumindest einlagig in mindestens einer Verstärkungslage (19) eingebettet auf dem Rand der Gasaustrittsöffnung (6) angeordnet ist, wobei ein gemeinsames Verschweißen des Randes der Einblasöffnung (5) und der Verstärkungslage (19) mit dem Rand der Gasaustrittsöffnung (6) erfolgt.

14. Airbagmodul nach einem der Ansprüche 1 bis 13, **dadurch gekennzeichnet, dass** der Rand der Einblasöffnung (5) an seinem äußeren Umfang umlaufend mit einem elastischen Spannmittel (16) versehen ist, das derart in dem Bereich des Randes der Gasaustrittsöffnung (6) angreift, dass es die Einblasöffnung (5) vor und/oder während des Laserschweißens gegenüber der Gasaustrittsöffnung (6) fixiert und in der Schweißzone in Anlage hält.

15. Verfahren zur Herstellung einer Schweißverbindung zwischen einer Einblasöffnung (5) eines Airbags (4) eines Kraftfahrzeuges und einer Gasaustrittsöffnung (6) eines einen Gasgenerator aufnehmenden Airbagmodulgehäuses (2) nach dem Oberbegriff des Anspruchs 1, **dadurch gekennzeichnet, dass** die Schweißverbindung zwischen dem aus einem laserstrahltransparenten Kunststoff (7) bestehenden Rand der Einblasöffnung (5) des Airbags (4) und dem aus einem laserstrahlabsorbierenden Kunststoff (8) gefertigten Rand der Gasaustrittsöffnung (6) des Airbagmodulgehäuses (2) in einem Laserdurchstrahlverfahren hergestellt wird.

16. Verfahren nach Anspruch 15, **dadurch gekennzeichnet, dass** ein Festkörperlaser oder ein Hochleistungsdiodenlaser für das Laserdurchstrahlverfahren verwendet wird.

17. Verfahren nach Anspruch 15 oder 16, **dadurch gekennzeichnet, dass** das Laserdurchstrahlverfahren als Konturschweißverfahren oder Simultanschweißverfahren durchgeführt wird.

18. Verfahren nach einem der Ansprüche 15 bis 17, **dadurch gekennzeichnet, dass** der Laserstrahl (11) mittels eines Roboters entlang der von dem Rand der Einblasöffnung (5) und dem Rand der Gasaustrittsöffnung (6) gebildeten zu verschweißenden Kontur geführt wird.

19. Verfahren nach einem der Ansprüche 15 bis 17, **dadurch gekennzeichnet, dass** zur Erzeugung des Laserstrahls (11) Laserdiodenbarren oberhalb der zu verschweißenden Kontur angeordnet werden.

20. Verfahren nach einem der Ansprüche 15 bis 19, **dadurch gekennzeichnet, dass** der Rand der Einblasöffnung (5) an dem Rand der Gasaustrittsöffnung (6) vor dem Verschweißen fixiert wird.

21. Verfahren nach Anspruch 20, **dadurch gekennzeichnet, dass** der Rand der Einblasöffnung (5) mittels eines transparenten Stempels (17) auf den Rand der Gasaustrittsöffnung (6) gepresst wird.

22. Verfahren nach Anspruch 20, **dadurch gekennzeichnet, dass** der Rand der Einblasöffnung (5) derart zu dem Rand der Gasaustrittsöffnung (6) verspannt wird, dass er unter Vorspannung an einem Wulst (10) in der Schweißzone des Randes der Gasaustrittsöffnung (6) anliegt.

## Claims

1. Airbag module for a motor vehicle with an airbag module housing (2) comprising an airbag chamber (3) for an airbag (4) which can be inflated by a gas generator and the injection opening (5) of which is welded all round at the edge to an edge of a gas outlet opening (6) of the airbag module housing (2), wherein the edges of the gas outlet opening (6) and of the injection opening (5) are made of a thermoplastic plastics material, **characterised in that** at least the edge of the injection opening (5) consists of a laser beam-transparent plastics material (7) and at least the edge of the gas outlet opening (6) consists of a laser beam-absorbing plastics material (8), wherein the welded joint is effected by laser irradiation.

2. Airbag module according to Claim 1, **characterised in that** the laser beam (11) of the laser irradiation method is guided or formed such that it penetrates into the plastics materials (7, 8) in parallel, mutually spaced and/or zigzag lines (20), sinuous lines (23) or combinations of these line types.

3. Airbag module according to Claim 1, **characterised in that** the plastics material (8) of the airbag module housing (2) is coloured such that it appears black in the optically visible light wave range and has high transmission in the infrared range.

4. Airbag module according to Claim 3, **characterised in that** the plastics material (8) of the airbag module housing (2) is coloured with carbon-black particles.

5. Airbag module according to any one of Claims 1 to 4, **characterised in that** the edge of the gas outlet opening (6) comprises at least one all-round bead (10), extending in the direction of the edge of the injection opening (5), for determining the welding zone.

6. Airbag module according to any one of Claims 1 to 5, **characterised in that** the airbag module housing (2) is provided with retaining elements (13) for fixing the edge of the injection opening (5) before and during laser welding.

7. Airbag module according to Claim 1, **characterised in that** the plastics material (7) of the airbag (4) has a higher melting point than the plastics material (8) of the airbag module housing (2).

8. Airbag module according to any one of Claims 1 to 7, **characterised in that** the plastics material (7) of the airbag (4) is reinforced at least in the region of the edge of the injection opening (5) with at least one woven fabric layer (12) and/or knitted fabric layer in each case.

9. Airbag module according to Claim 8, **characterised in that** a plurality of woven fabric layers (12) of differing thread thickness and/or mesh width are worked into the plastics material (7).

10. Airbag module according to Claim 9, **characterised in that** the woven fabric layer (12) with the greatest mesh width is disposed directly adjacent and parallel to the edge of the gas outlet opening (6).

11. Airbag module according to any one of Claims 8 to 10, **characterised in that** the woven fabric layers (12) and/or the knitted fabric layers are sewn or adhesively bonded together.

12. Airbag module according to any one of Claims 1 to 11, **characterised in that** the plastics material (7) of the edge of the injection opening (5) is disposed in a plurality of layers (18) looped one above the other on the edge of the gas outlet opening (6) for welding.

13. Airbag module according to any one of Claims 1 to 11, **characterised in that** the plastics material (7) of the edge of the injection opening (5) is disposed with at least one layer embedded in at least one reinforcing layer (19) on the edge of the gas outlet opening (6), wherein the edge of the injection opening (5) and the reinforcing layer (19) are jointly welded to the edge of the gas outlet opening (6).

14. Airbag module according to any one of Claims 1 to 13, **characterised in that** the edge of the injection opening (5) is provided all round at its outer circumference with an elastic clamping means (16) which acts in the region of the edge of the gas outlet opening (6) such that it fixes the injection opening (5) with respect to the gas outlet opening (6) before and/or during laser welding and holds it in place in the welding zone.

15. Method for producing a welded joint between an injection opening (5) of an airbag (4) of a motor vehicle and a gas outlet opening (6) of an airbag module housing (2) receiving a gas generator according to the preamble of Claim 1, **characterised in that** the welded joint between the edge, consisting of a laser beam-transparent plastics material (7), of the injection opening (5) of the airbag (4) and the edge, made of a laser beam-absorbing plastics material (8), of the gas outlet opening (6) of the airbag module housing (2) is produced in a laser irradiation method.

16. Method according to Claim 15, **characterised in that** a solid-state laser or a high-power diode laser is used for the laser irradiation method.

17. Method according to Claim 15 or 16, **characterised in that** the laser irradiation method is carried out as a contour welding method or simultaneous welding method.

18. Method according to any one of Claims 15 to 17, **characterised in that** the laser beam (11) is guided by means of a robot along the contour which is to be welded and is formed by the edge of the injection opening (5) and the edge of the gas outlet opening (6).

19. Method according to any one of Claims 15 to 17, **characterised in that** laser diode bars are disposed above the contour which is to be welded in order to produce the laser beam (11).

20. Method according to any one of Claims 15 to 19, **characterised in that** the edge of the injection opening (5) is fixed to the edge of the gas outlet opening (6) before welding.

21. Method according to Claim 20, **characterised in that** the edge of the injection opening (5) is pressed onto the edge of the gas outlet opening (6) by means of a transparent die (17).

22. Method according to Claim 20, **characterised in that** the edge of the injection opening (5) is clamped to the edge of the gas outlet opening (6) such that it lies in a biased state against a bead (10) in the welding zone of the edge of the gas outlet opening (6).

## Revendications

1. Module de coussin gonflable ou airbag pour un véhicule automobile avec un boîtier de module (2) de coussin gonflable qui comporte une chambre (3) de module de coussin gonflable pour un coussin gonflable (4) pouvant être gonflé par un générateur de gaz dont l'ouverture de gonflage (5) est soudée périphériquement sur le bord à un bord d'un ouverture (6) de sortie de gaz du boîtier (2) de module de coussin gonflable, tandis que les bords de l'ouverture (6) de sortie de gaz et de l'ouverture (5) de gonflage sont fabriqués en une matière synthétique thermoplastique, **caractérisé en ce qu'**au moins le bord de l'ouverture de gonflage (5) se compose d'une matière synthétique (7) transparente au rayonnement laser et au moins le bord de l'ouverture de sortie de gaz (6) se compose d'une matière synthétique (8), absorbant le rayonnement laser, l'assemblage soudé étant réalisé par le procédé de traversée de faisceau laser.

2. Module de coussin gonflable selon la revendication 1, **caractérisé en ce que** le faisceau laser (11) du procédé de traversée de faisceau laser est guidé ou configuré de telle sorte qu'il pénètre dans les matières synthétiques (7, 8) en des lignes (20) parallèles, espacées les unes des autres et/ou en zigzag, en des lignes sinueuses (23) ou en des combinaisons de ces genres de lignes.

3. Module de coussin gonflable selon la revendication 1, **caractérisé en ce que** la matière synthétique (8) du boîtier de module de coussin gonflable (2) est teintée de telle sorte qu'elle apparaît noire dans la plage d'ondes lumineuses visibles et présente une transmission élevée dans la plage des infrarouges.

4. Module de coussin gonflable selon la revendication 3, **caractérisé en ce que** la matière synthétique (8) du boîtier de module de coussin gonflable (2) est colorée par des particules de noir de fumée.

5. Module de coussin gonflable selon l'une des revendications 1 à 4,
**caractérisé en ce que** le bord de l'ouverture de sortie de gaz comporte au moins un bourrelet (10) périphérique s'étendant en direction du bord de l'ouverture (5) pour la détermination de la zone de soudage.

6. Module de coussin gonflable selon l'une des revendications 1 à 5, **caractérisé en ce que** le boîtier de module de coussin gonflable (2) est doté d'éléments de maintien (13) pour la fixation du bord de l'ouverture de gonflage (5) avant et pendant le soudage au laser.

7. Module de coussin gonflable selon la revendication 1, **caractérisé en ce que** la matière synthétique (7) du coussin gonflable (4) présente un point de fusion plus élevé que la matière synthétique (8) du boîtier de module de coussin gonflable (2).

8. Module de coussin gonflable selon l'une des revendications 1 à 7, **caractérisé en ce que** la matière synthétique 7 du coussin gonflable (4) est renforcée au moins dans la zone du bord de l'ouverture de gonflage (5) par respectivement au moins une couche tissée (12) et/ou une couche de tissu à mailles.

9. Module de coussin gonflable selon la revendication 8, **caractérisé en ce que** plusieurs couches de tissu (12) de différentes épaisseurs de fils et/ou de différentes largeurs de maille sont incorporées dans la matière synthétique (7).

10. Module de coussin gonflable selon la revendication 9, **caractérisé en ce que** la couche de tissu (12) avec la largeur de maille la plus grande est disposée directement au voisinage et parallèlement au bord de l'ouverture de sortie du gaz (6).

11. Module de coussin gonflable selon l'une des revendications 8 à 10, **caractérisé en ce que** les couches de tissu (12) et/ou les couches de tissu à mailles sont cousues ou collées ensemble.

12. Module de coussin gonflable selon l'une des revendications 1 à 11, **caractérisé en ce que**, pour le soudage, la matière synthétique (7) du bord de l'ouverture (5) est disposée en plusieurs couches en accordéon (18) l'une au-dessus de l'autre sur le bord de l'ouverture de sortie du gaz (6).

13. Module de coussin gonflable selon l'une des revendications 1 à 11, **caractérisé en ce que** la matière synthétique (7) du bord de l'ouverture d'entrée de gonflage (5) est disposé au bord de l'ouverture de sortie du gaz (6), intégré dans au moins une couche de renfort (19), de sorte qu'un soudage commun du bord de l'ouverture d'entrée de gonflage (5) et de la couche de renfort (19) s'effectue avec le bord de l'ouverture de sortie de gaz (6).

14. Module de coussin gonflable selon l'une des revendications 1 à 13, **caractérisé en ce que** le bord de l'ouverture d'entrée de gonflage (5) est doté tout autour à sa périphérie extérieure d'un moyen de serrage élastique (16), qui agit dans la zone du bord de l'ouverture de sortie du gaz (6), de telle sorte qu'il fixe l'ouverture (5) avant et/ou pendant le soudage au laser par rapport à l'ouverture de sortie du gaz (6) et la maintient en appui dans la zone de soudage.

15. Procédé de fabrication d'un assemblage soudé entre une ouverture (5) d'un coussin gonflable (4) d'un véhicule automobile et une ouverture de sortie de gaz (6) d'un boîtier (2) de module de coussin gonflable recevant un générateur de gaz, selon le préambule de la revendication 1, **caractérisé en ce que** l'assemblage soudé entre le bord, se composant d'une matière synthétique (7) transparente au rayonnement laser, de l'ouverture (5) du coussin gonflable (4) et le bord de l'ouverture de sortie du gaz (6) du boîtier de module de coussin gonflable (2), fabriqué en une matière synthétique (8) absorbant le rayonnement laser, est réalisé par un procédé de traversée de faisceau laser.

16. Procédé selon la revendication 15, **caractérisé en ce qu'**un laser à solide ou un laser à diode de grande puissance est utilisé pour le procédé de traversée de faisceau laser.

17. Procédé selon la revendication 15 ou 16, **caractérisé en ce que** le procédé de traversée de faisceau laser est exécuté comme procédé de soudage de contour ou comme procédé de soudage simultané.

18. Procédé selon l'une des revendications 15 à 17, **caractérisé en ce que** le faisceau laser (11) est guidé le long du contour à souder formé par le bord de l'ouverture d'entrée de gonflage (5) et par le bord de l'ouverture de sortie de gaz (6) au moyen d'un robot.

19. Procédé selon l'une des revendications 15 à 17, **caractérisé en ce que**, pour la production du faisceau laser (11), des barres de diodes laser sont disposées au-dessus du contour à souder.

20. Procédé selon l'une des revendications 15 à 19, **caractérisé en ce que** le bord de l'ouverture d'entrée de gonflage (5) est fixé avant le soudage au bord de l'ouverture de sortie de gaz (6).

21. Procédé selon la revendication 20, **caractérisé en ce que** le bord de l'ouverture d'entrée de gonflage (5) est serré sur le bord de l'ouverture de sortie de gaz (6) au moyen d'un poinçon transparent (17).

22. Procédé selon la revendication 20, **caractérisé en ce que** le bord de l'ouverture d'entrée de gonflage (5) est serré par rapport au bord de l'ouverture de sortie du gaz (6) de telle sorte qu'il repose sous précharge contre un bourrelet (10) dans la zone de soudage du bord de l'ouverture de sortie de gaz (6).
